# EUROPÄISCHE PATENTSCHRIFT

(11) **EP 0 647 685 B1**
(45) Veröffentlichungstag und Bekanntmachung des Hinweises auf die Patenterteilung: **08.03.2000**
(21) Anmeldenummer: 94810578.8
(22) Anmeldetag: 04.10.1994
(51) Int. Cl.: C09B 62/51, D06P 1/38

(54) **Reaktivfarbstoffe, Verfahren zu deren Herstellung und deren Verwendung**
Reactive dyes, process for their manufacture and use thereof
Colorants réactifs, leur procédé de production et leur utilisation

(30) Priorität: 12.10.1993 CH 307293
(43) Veröffentlichungstag der Anmeldung: 12.04.1995
(73) Patentinhaber: Ciba Specialty Chemicals Holding Inc., 4057 Basel (CH)
(72) Erfinder: Tzikas, Athanassios, Dr., CH-4133 Pratteln (CH); Carisch, Claudia, CH-4153 Reinach (CH)

(56) Entgegenhaltungen:
- EP-A- 0 210 492
- EP-A- 0 343 262
- EP-A- 0 362 557
- EP-A- 0 559 617
- DE-A- 2 034 591

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 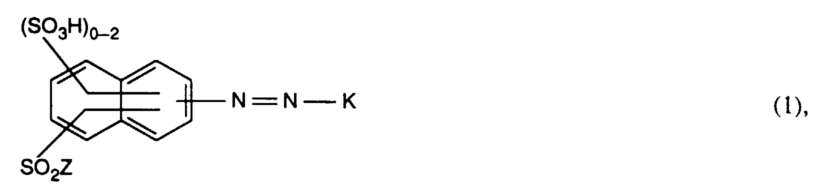 worin
Z eine Gruppe der Formel -CH=CH₂ oder -CH₂-CH₂-Y und Y eine Abgangsgruppe ist, und
K ein Rest der Formel 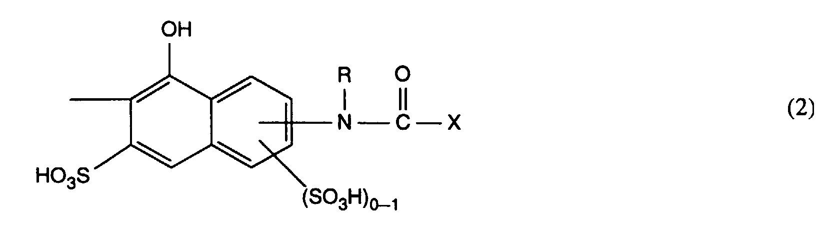 oder 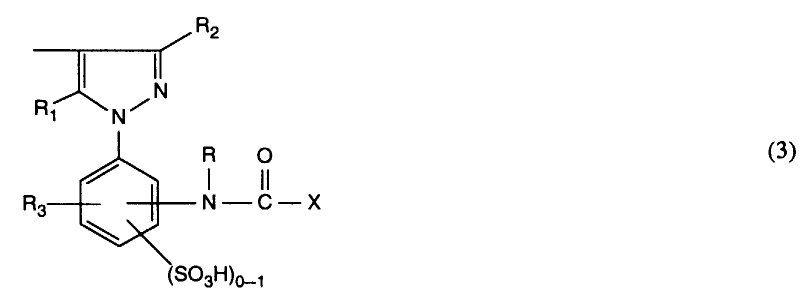 ist,
   wobei X ein Rest der Formel -(CH₂)ₙ-Cl, 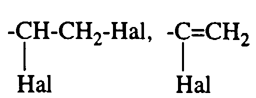 oder -CH=CH₂, Hal Halogen und n die Zahl 1, 2, 3 oder 4 bedeutet,
R Wasserstoff,
R₁ Amino oder Hydroxyl,
R₂ Methyl oder Carboxyl und
R₃ Wasserstoff, C₁-C₄-Alkyl, C₁-C₄-Alkoxy, C₂-C₄-Alkanoylamino, Halogen oder Carboxyl ist.

In der EP-A-0 559 617 werden Azofarbstoffe offenbart, die sich vom Gegenstand der vorliegenden Erfindung durch die Diazokomponente unterscheiden.

Die in der EP-A-0 362 557 offenbarten Azofarbstoffe unterscheiden sich vom Gegenstand der vorliegenden Erfindung hinsichtlich unseres Rests X an der Kupplungskomponente.

Die in der EP-A-0 210 492, der EP-A-0 343 262 und der DE-A-20 34 591 offenbarten Azofarbstoffe unterscheiden sich dadurch vom Gegenstand der vorliegenden Erfindung, dass die Amidgruppe an der Kupplungskomponente nicht faserreaktiv ist.

Als C₁-C₄-Alkyl kommt für R₃ Methyl, Aethyl, Propyl, Isopropyl, Butyl, Isobutyl, sek.-Butyl oder tert.-Butyl, insbesondere Methyl, in Betracht.

Als C₁-C₄-Alkoxy kommen für R₃ Methoxy, Aethoxy, Propoxy, Isopropoxy, Butoxy, Isobutoxy, sek.-Butoxy oder tert.-Butoxy, insbesondere Methoxy, in Betracht.

Als C₂-C₄-Alkanoylamino kommen für R₃ z.B. Acetylamino oder Propionylamino, insbesondere Acetylamino, in Betracht.

Als Halogen kommen für R₃ z.B. Fluor, Brom oder insbesondere Chlor in Betracht.

Geeignete Abgangsgruppen Y sind z.B. -Cl, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist Y eine Gruppe der Formel -Cl, -OSO₃H, -SSO₃H, -OCO-CH₃, -OCO-C₆H₅ oder -OPO₃H₂, insbesondere eine Gruppe der Formel -Cl, -OSO₃H oder -OCO-CH₃. Besonders bevorzugt ist Y eine Gruppe der Formel -OSO₃H.

Für Hal kommen z.B. Chlor oder Brom, insbesondere Brom, in Betracht.

Der Rest R₁ ist bevorzugt Hydroxyl.

Der Rest R₂ ist bevorzugt Methyl.

Der Rest R₃ ist bevorzugt Wasserstoff.

Für n ist die Zahl 1 bevorzugt.

Als Reste K der Formeln (2) und (3) sind solche bevorzugt, welche jeweils nur eine Sulfogruppe enthalten.

Die Reaktivfarbstoffe der Formel (1) enthalten bevorzugt mindestens eine Sulfogruppe, insbesondere 1 bis 4 Sulfogruppen. Besonders bevorzugt enthalten die Reaktivfarbstoffe der Formel (1) eine oder zwei Sulfogruppen.

Bevorzugt sind Reaktivfarbstoffe der Formel (1), worin R₁ Amino oder Hydroxyl, insbesondere Hydroxyl, R₂ Methyl oder Carboxyl, insbesondere Methyl, R₃ Wasserstoff, Y eine Gruppe der Formel -Cl, -OSO₃H oder -OCO-CH₃, insbesondere eine Gruppe der Formel -OSO₃H, ist, und n die Zahl 1 bedeutet, wobei die Reaktivfarbstoffe der Formel (1) mindestens eine Sulfogruppe, insbesondere 1 bis 4 Sulfogruppen, enthalten.

Besonders bevorzugt sind Reaktivfarbstoffe der Formel 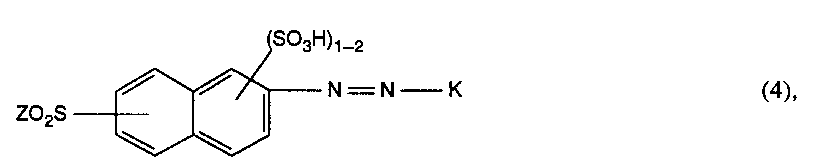 worin für Z und K die oben angegebenen Bedeutungen und Bevorzugungen gelten.

Vorzugsweise enthalten die erfindungsgemässen Reaktivfarbstoffe nur eine Sulfogruppe in der Diazokomponente.

Als Reste K sind die Reste der Formeln 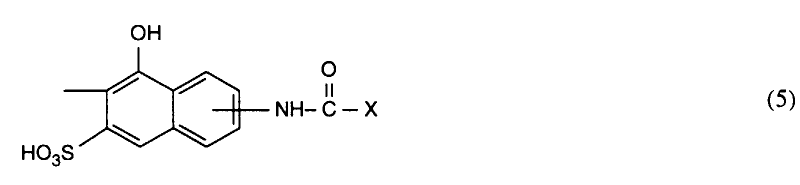 und 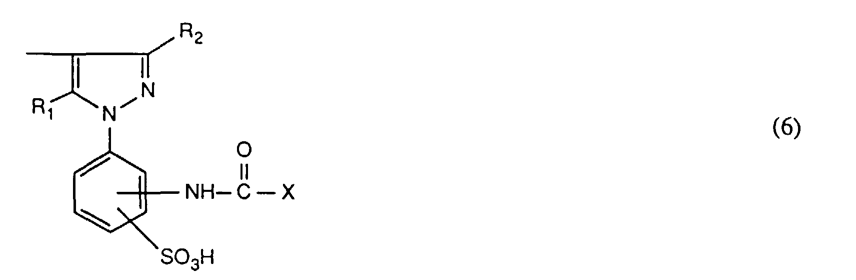 besonders bevorzugt, wobei für X, R₁ und R₂ die oben angegebenen Bedeutungen und Bevorzugungen gelten.

Als Rest K sind Reste der Formel (2), insbesondere Reste der Formel (5) bevorzugt.

Ganz besonders bevorzugt sind Reaktivfarbstoffe der Formel 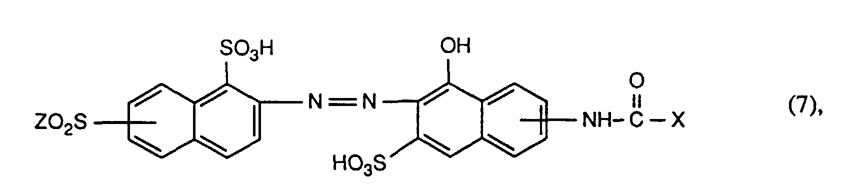 worin
X ein Rest der Formel -CH₂-Cl, 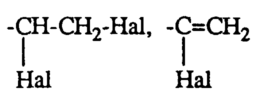 oder -CH=CH₂ ist und Hal Halogen, insbesondere Brom, bedeutet, und
Z eine Gruppe der Formel -CH=CH₂ oder -CH₂-CH₂-Y und Y eine Gruppe der Formel -Cl, -OSO₃H oder -OCO-CH₃, insbesondere eine Gruppe der Formel -OSO₃H, ist.

Ganz besonders bevorzugt sind ferner Reaktivfarbstoffe der Formel 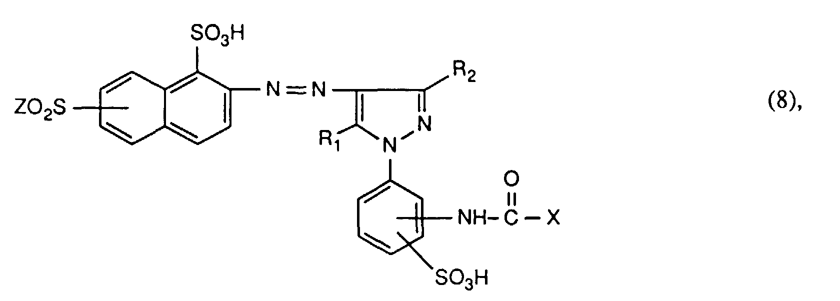 worin
R₁ Amino oder Hydroxyl,
R₂ Methyl oder Carboxyl,
X ein Rest der Formel -CH₂-Cl, 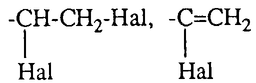 oder -CH=CH₂ ist und Hal Halogen, insbesondere Brom, bedeutet, und
Z eine Gruppe der Formel -CH=CH₂ oder -CH₂-CH₂-Y und Y eine Gruppe der Formel -Cl, -OSO₃H oder -OCO-CH₃, insbesondere eine Gruppe der Formel -OSO₃H, ist.

Ganz besonders wichtig sind Reaktivfarbstoffe der Formel (7).

Als Rest X kommen in den erfindungsgemässen Reaktivfarbstoffen vorzugsweise die Reste der Formeln 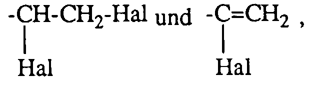 worin Hal Chlor oder Brom, insbesondere Brom, ist, in Betracht.

Als Rest Z kommen in den erfindungsgemässen Reaktivfarbstoffen vorzugsweise die Reste der Formeln -CH=CH₂ und -CH₂-CH₂-OSO₃H, insbesondere der Rest der Formel -CH₂-CH₂-OSO₃H, in Betracht.

Von besonderem Interesse sind solche Reaktivfarbstoffe, worin X ein Rest der Formel 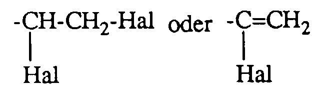 ist und Hal Halogen, insbesondere Brom, bedeutet, und Z eine Gruppe der Formel -CH=CH₂ oder -CH₂-CH₂-OSO₃H, insbesondere eine Gruppe der Formel -CH₂-CH₂-OSO₃H, ist.

Gegenstand der Erfindung ist ferner ein Verfahren zur Herstellung der Reaktivfarbstoffe der Formel (1), welches dadurch gekennzeichnet ist, dass man ein Amin der Formel 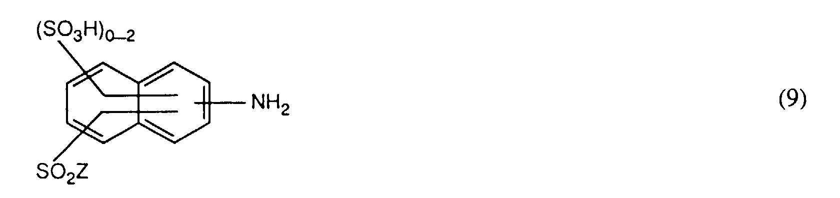 diazotiert und auf eine Verbindung der Formel 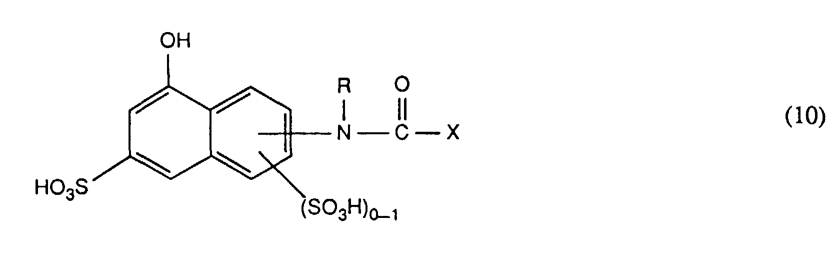 oder 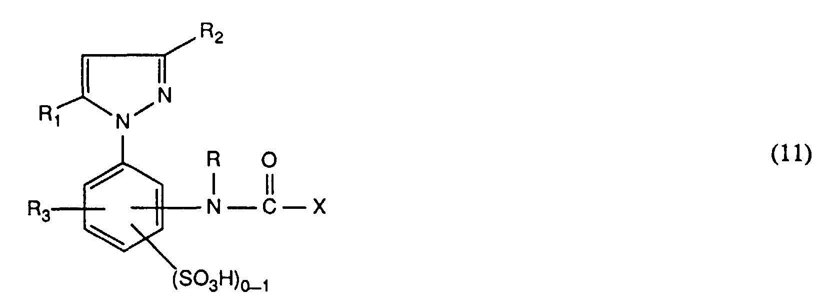 kuppelt, wobei X, Z, R, R₁, R₂ und R₃ die unter Formel (1) angegebenen Bedeutungen haben.

Die Diazotierung des Amins der Formel (9) erfolgt in der Regel durch Einwirken salpetriger Säure in wässrig-mineralsaurer Lösung bei tiefer Temperatur, wie z.B. 0 bis 15°C, die Kupplung auf die Kupplungskomponente der Formel (10) oder (11) bei sauren, neutralen bis schwach alkalischen pH-Werten, insbesondere bei einem pH-Wert von 2 bis 8.

Eine abgewandelte Ausführungsform des Verfahrens besteht darin, dass man zunächst einen Farbstoff herstellt, der eine Vorstufe des Reaktivrestes enthält, und diese nachträglich in die Endstufe umwandelt, z.B. durch Veresterung oder eine Additionsreaktion. Beispielsweise kann man einen Farbstoff, worin Z ein Rest HO-CH₂CH₂- ist, herstellen und dieses Produkt mit Schwefelsäure umsetzen, so dass die Hydroxygruppe in die Sulfatogruppe überführt wird. Die Sulfatierung der Hydroxygruppe erfolgt z.B. durch Umsetzung mit konzentrierter Schwefelsäure bei ca. 0°C bis mässig erhöhter Temperatur.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit einer Base, wie z.B. Natriumhydroxid, behandeln, wobei die Sulfatoäthylsulfonylreste in Vinylsulfonylreste übergehen.

In dem erfindungsgemässen Verfahren zur Herstellung der Reaktivfarbstoffe der Formel (1) gelten für die Substituenten der Verbindungen der Formeln (9), (10) und (11) die zuvor angegebenen Bedeutungen und Bevorzugungen.

Die Verbindungen der Formeln (9), (10) und (11) sind bekannt oder können in Analogie zu bekannten Verfahren hergestellt werden.

Die Reaktivfarbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Reaktivfarbstoffe der Formel (1) eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern. Besonders geeignet sind die Reaktivfarbstoffe der Formel (1) zum Färben oder Bedrucken von cellulosehaltigen Fasermaterialien oder insbesondere natürlichen oder synthetischen Polyamidfasermaterialien.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1: 22 Teile der Verbindung der Formel

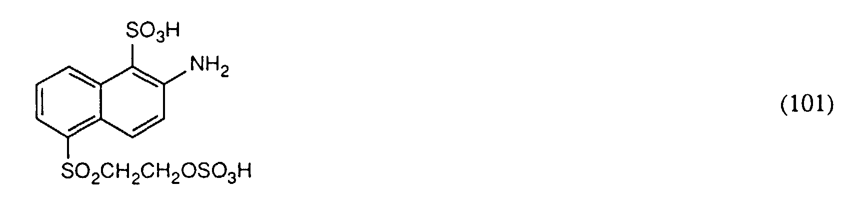

in 280 Teilen Eiswassersuspension werden mit 18 Teilen konzentrierter wässriger Salzsäure angesäuert und mit 15,6 Teilen einer 5-normalen Natriumnitritlösung diazotiert. Man rührt eine Stunde bei einer Temperatur von ca. 5 bis 15°C nach und zerstört dann überschüssige salpetrige Säure mittels Amidosulfonsäure. Die so hergestellte Diazoniumsalzlösung lässt man bei einem pH-Wert von 4 bis 5 langsam in eine Suspension aus 22 Teilen der Kupplungskomponente der Formel 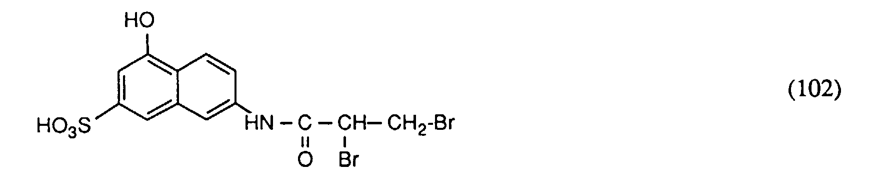 in 100 Teilen Wasser einlaufen. Der pH wird durch Zugabe von Natriumbicarbonat auf einen Wert von 6 bis 7 erhöht. Man rührt 2 Stunden bis zur vollständigen Kupplung nach. Dann wird der Farbstoff umkehrosmotisiert und gefriergetrocknet. Man erhält einen Farbstoff, der in Form der freien Säure der Verbindung der Formel 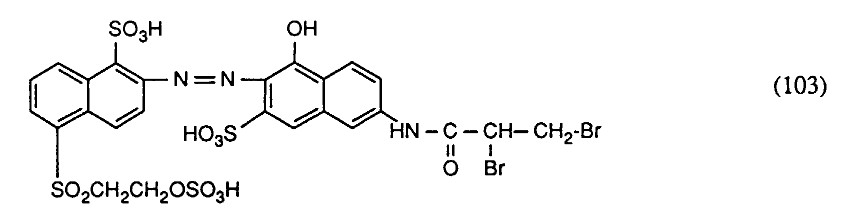 entspricht. Der Farbstoff der Formel (103) färbt Baumwolle und Wolle in orangen Farbtönen.

### Beispiele 2 bis 24: Analog dem Beispiel 1 können die in der folgenden Tabelle in Spalte 2 angegebenen Reaktivfarbstoffe erhalten werden, die Wolle und Baumwolle in den in Spalte 3 angegebenen Farbtönen färben.

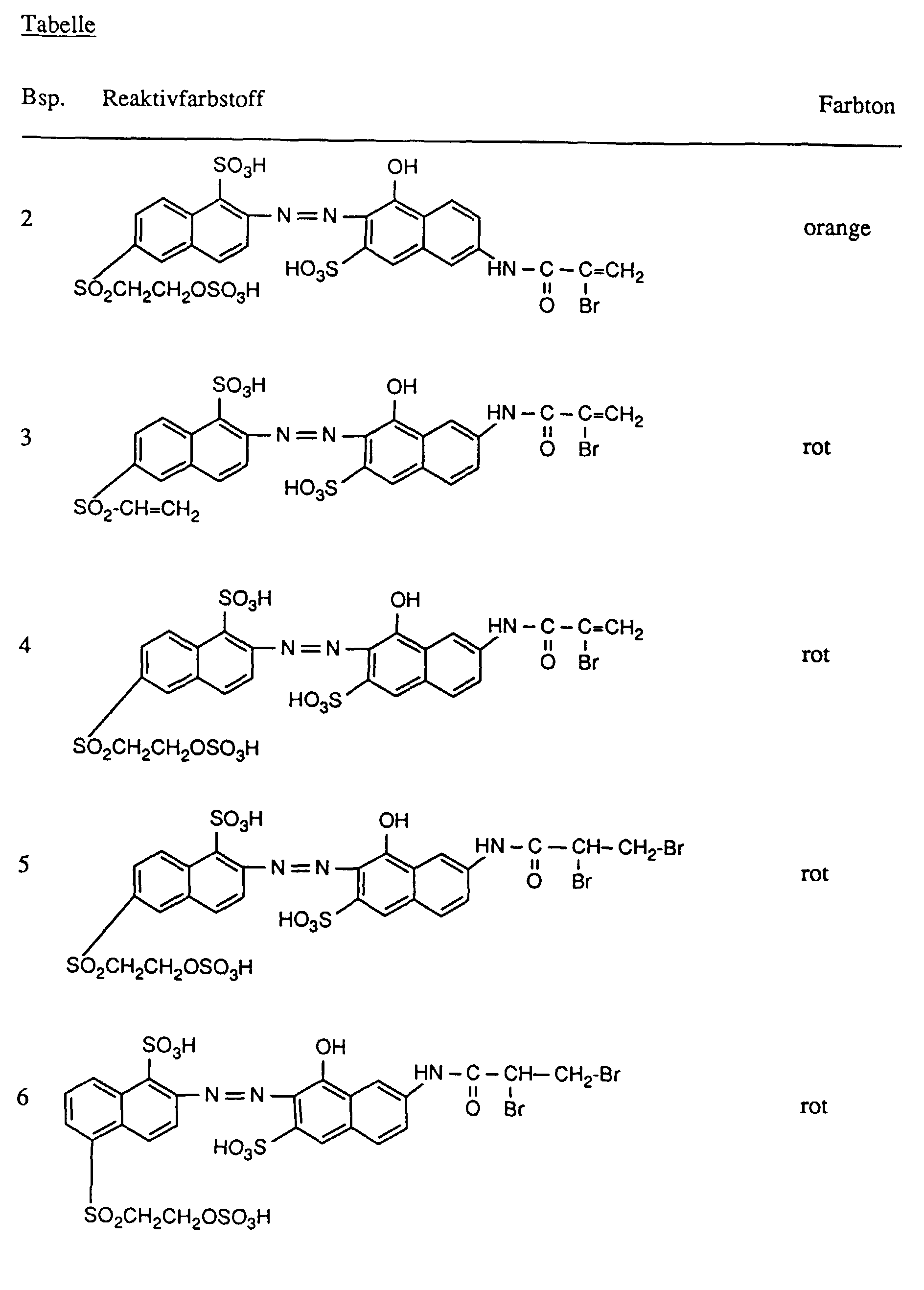

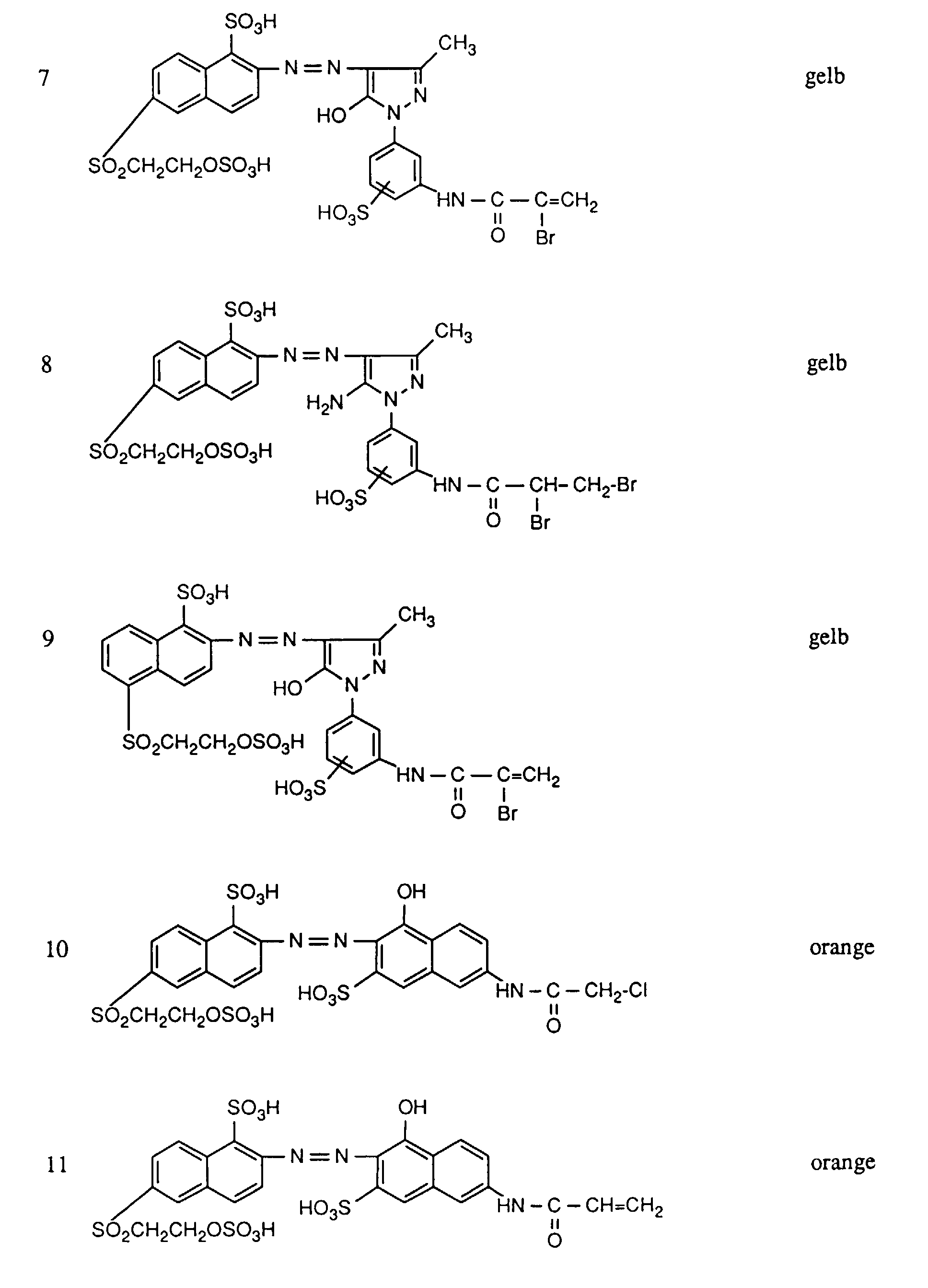

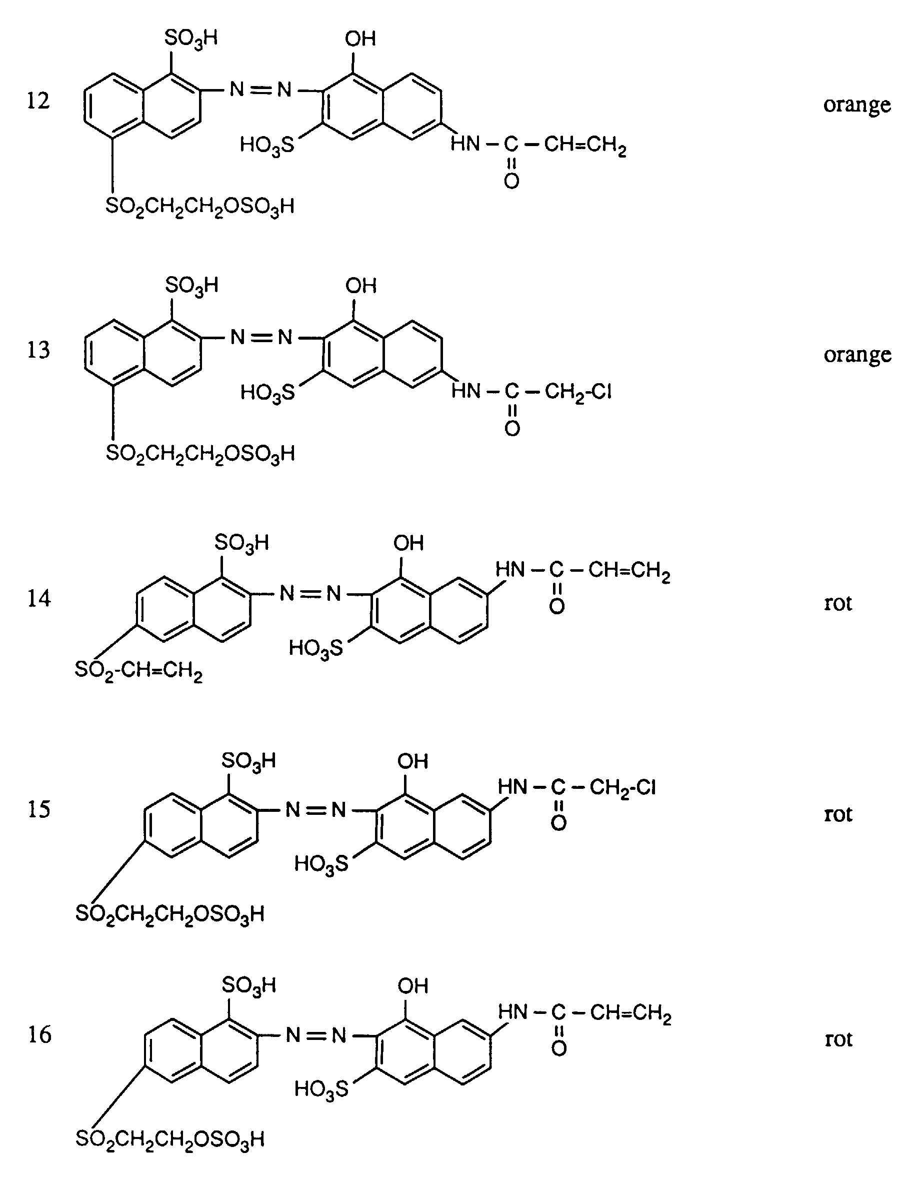

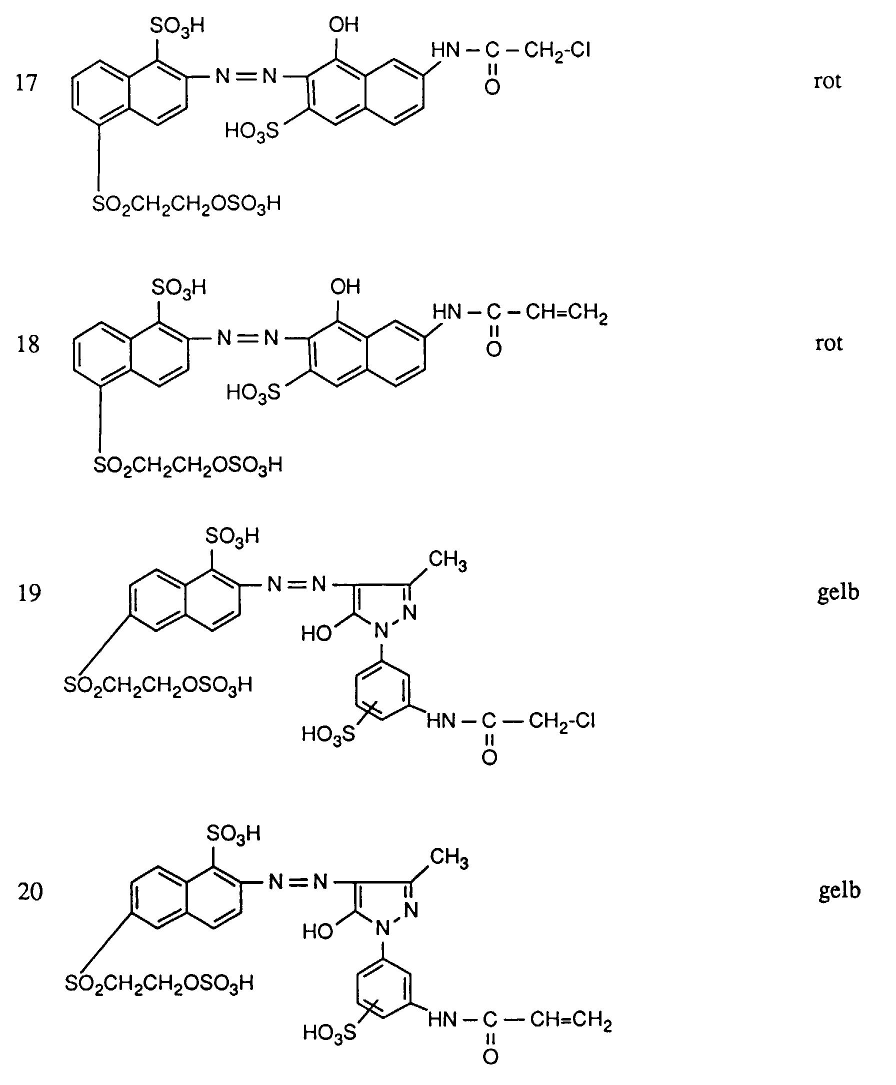

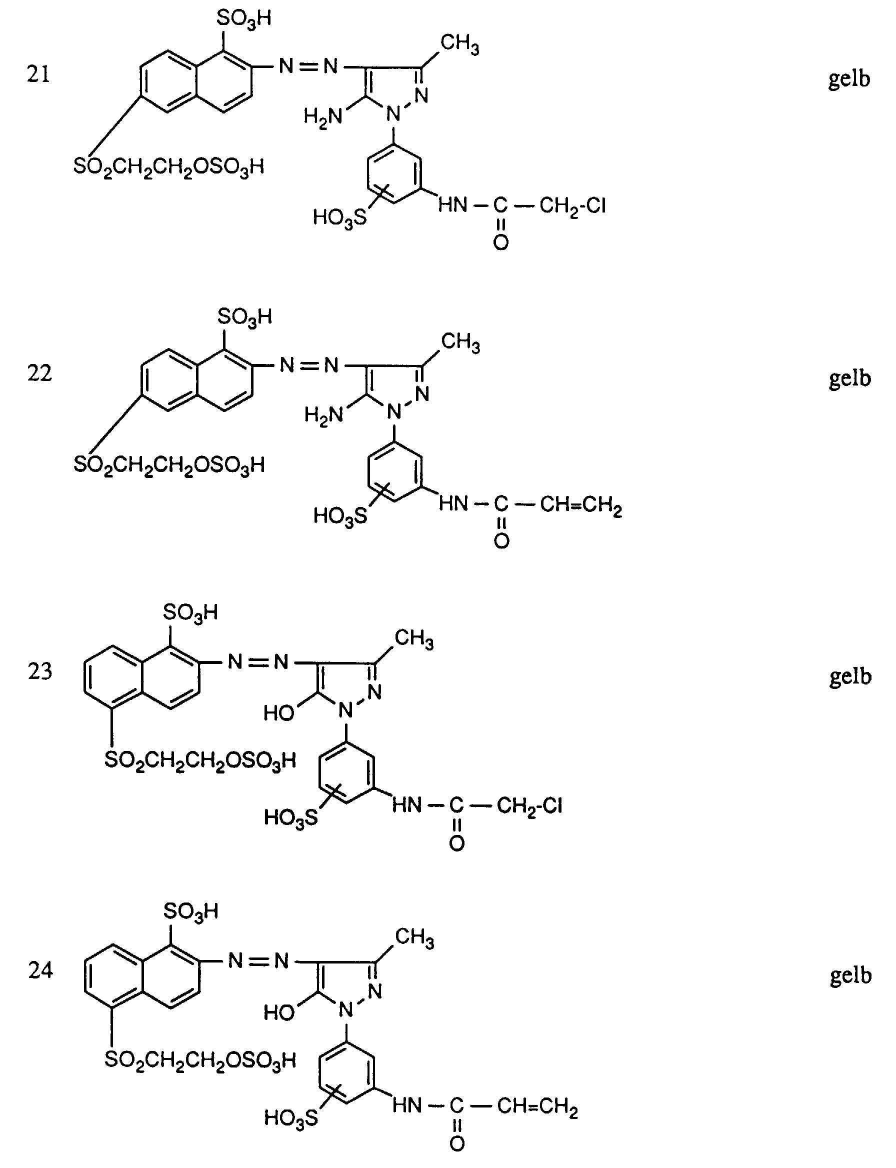

### Färbevorschrift I

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

Man bereitet ein Färbebad aus 2000 Teilen Wasser, 5 Teilen Natriumsulfat, 4 Teilen Natriumacetat, einem Teil eines Egalisierhilfsmittels (basierend auf dem Kondensationsprodukt aus einem höheren aliphatischen Amin und Ethylenoxid) und 1,9 Teilen des gemäss Beispiel 1 erhaltenen Reaktivfarbstoffes und stellt den pH des Färbebades durch Zugabe von Essigsäure auf einen Wert von 5,5. In das so erhaltene Färbebad geht man mit 100 Teilen Wollgewebe ein, erhitzt innerhalb von 50 Minuten auf ca. 100°C und färbt eine Stunde bei dieser Temperatur. Danach wird die gefärbte Ware gespült und getrocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 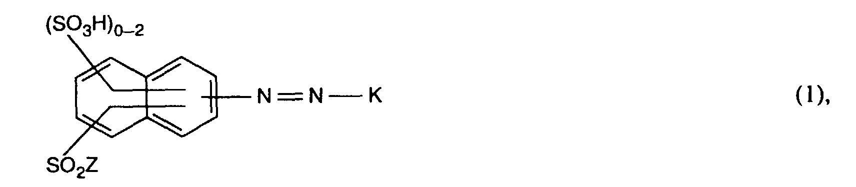 worin
Z eine Gruppe der Formel -CH=CH₂ oder -CH₂-CH₂-Y und Y eine Abgangsgruppe ist, und
K ein Rest der Formel 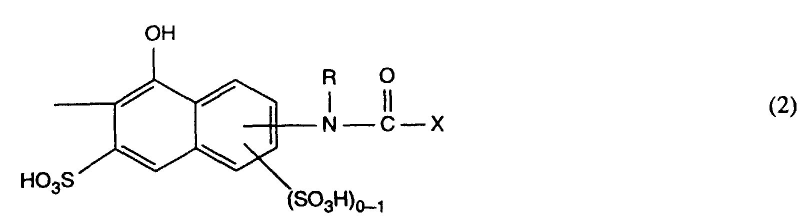 oder 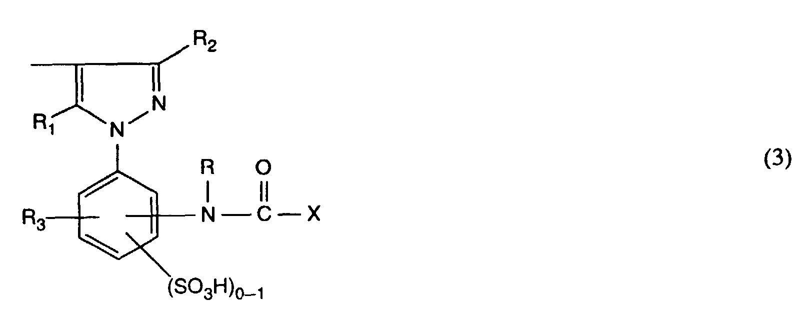 ist, wobei X ein Rest der Formel -(CH₂)ₙ-Cl, 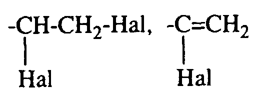 oder -CH=CH₂, Hal Halogen und n die Zahl 1, 2, 3 oder 4 bedeutet,
R Wasserstoff,
R₁ Amino oder Hydroxyl,
R₂ Methyl oder Carboxyl und
R₃ Wasserstoff, C₁-C₄-Alkyl, C₁-C₄-Alkoxy, C₂-C₄-Alkanoylamino, Halogen oder Carboxyl ist.

2. Reaktivfarbstoffe gemäss Anspruch 1, der Formel 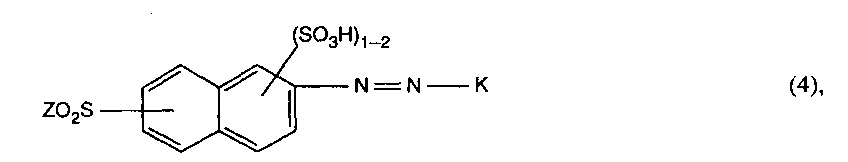 worin Z und K die in Anspruch 1 angegebenen Bedeutungen haben.

3. Reaktivfarbstoffe gemäss einem der Ansprüche 1 und 2, worin R₃ Wasserstoff ist.

4. Reaktivfarbstoffe gemäss einem der Ansprüche 1 bis 3, worin Y eine Gruppe der Formel -Cl, -OSO₃H, -SSO₃H, -OCO-CH₃, -OCO-C₆H₅ oder -OPO₃H₂, insbesondere eine Gruppe der Formel -Cl, -OSO₃H oder -OCO-CH₃, ist.

5. Reaktivfarbstoffe gemäss einem der Ansprüche 1 bis 4, worin n die Zahl 1 ist.

6. Reaktivfarbstoffe gemäss einem der Ansprüche 1 bis 5, worin K ein Rest der Formel 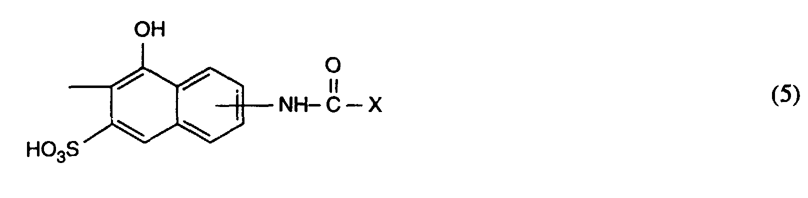 oder 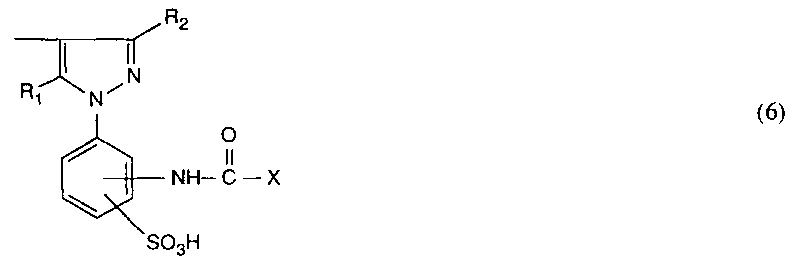 ist,
wobei X, R₁ und R₂ die in Anspruch 1 angegebenen Bedeutungen haben.

7. Reaktivfarbstoffe gemäss Anspruch 1, der Formel 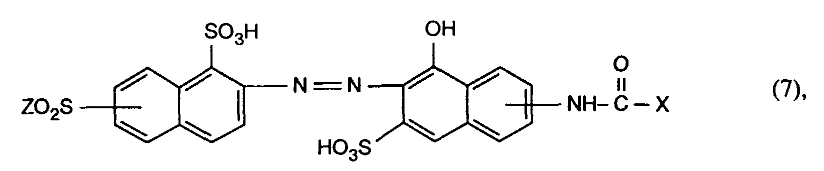 worin
X ein Rest der Formel -CH₂-Cl, 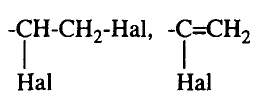 oder -CH=CH₂ ist und Hal Halogen bedeutet, und
Z eine Gruppe der Formel -CH=CH₂ oder -CH₂-CH₂-Y und Y eine Gruppe der Formel -Cl, -OSO₃H oder -OCO-CH₃ ist.

8. Reaktivfarbstoffe gemäss Anspruch 1, der Formel 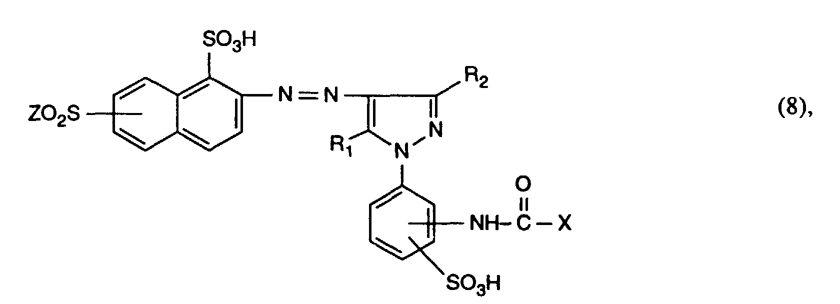 worin
R₁ Amino oder Hydroxyl,
R₂ Methyl oder Carboxyl,
X ein Rest der Formel -CH₂-Cl, 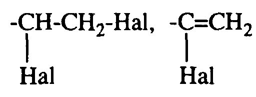 oder -CH=CH₂ ist und Hal Halogen bedeutet, und
Z eine Gruppe der Formel -CH=CH₂ oder -CH₂-CH₂-Y und Y eine Gruppe der Formel -Cl, -OSO₃H oder -OCO-CH₃ ist.

9. Reaktivfarbstoffe gemäss einem der Ansprüche 1 bis 8, worin X ein Rest der Formel 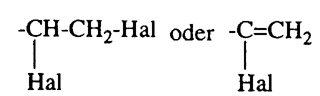 ist und Hal Halogen bedeutet, und
Z eine Gruppe der Formel -CH=CH₂ oder -CH₂-CH₂-OSO₃H ist.

10. Reaktivfarbstoffe gemäss einem der Ansprüche 1 bis 9, worin Hal Brom bedeutet.

11. Verfahren zur Herstellung von Reaktivfarbstoffen gemäss Anspruch 1, dadurch gekennzeichnet, dass man ein Amin der Formel 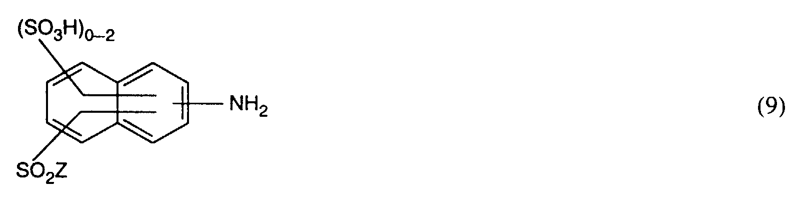 diazotiert und auf eine Verbindung der Formel 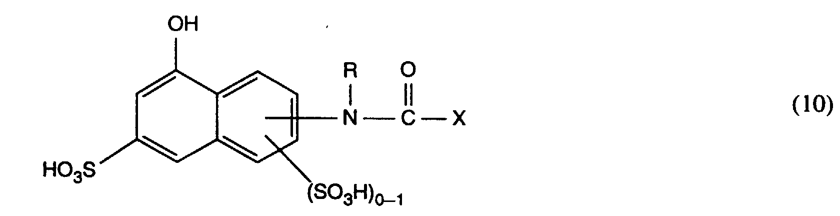 oder 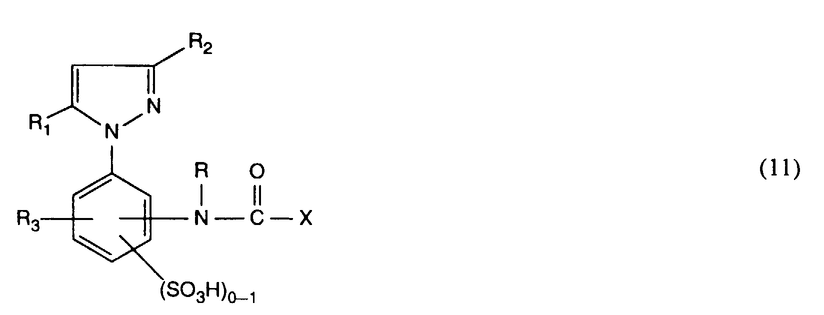 kuppelt, wobei X, Z, R, R₁, R₂ und R₃ die in Anspruch 1 angegebenen Bedeutungen haben.

12. Verwendung der Reaktivfarbstoffe gemäss einem der Ansprüche 1 bis 10 bzw. der gemäss Anspruch 11 erhaltenen Reaktivfarbstoffe zum Färben oder Bedrucken von hydroxylgruppenhaltigen oder stickstoffhaltigen Fasermaterialien.

13. Verwendung gemäss Anspruch 12 zum Färben oder Bedrucken von cellulosehaltigen Fasermaterialien oder natürlichen oder synthetischen Polyamidfasermaterialien.

## Claims

1. A reactive dye of formula 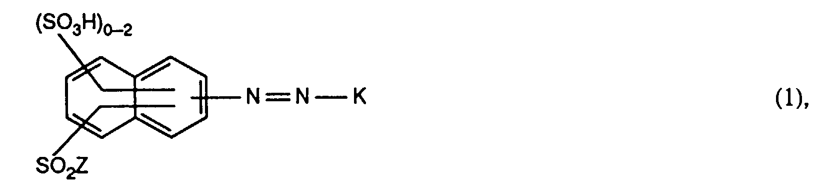 wherein
Z is a group of formula -CH=CH₂ or -CH₂-CH₂-Y, Y is a leaving group, and K is a radical of formula 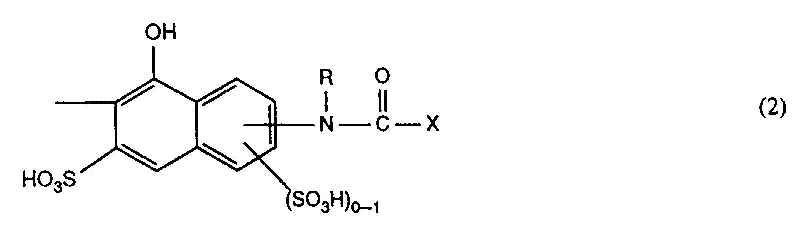 or 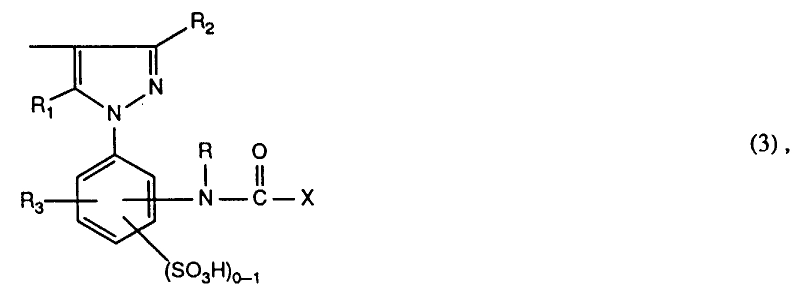 wherein X is a radical of formula -(CH₂)ₙ-Cl, 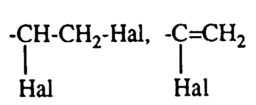 or -CH=CH₂, Hal is halogen and n is 1, 2, 3 or 4,
R is hydrogen or unsubstituted or substituted C₁-C₄alkyl,
R₁ is amino or hydroxyl,
R₂ is methyl or carboxyl, and
R₃ is hydrogen, C₁-C₄alkyl, C₁-C₄alkoxy, C₂-C₄alkanoylamino, halogen or carboxyl.

2. A reactive dye according to claim 1, of formula 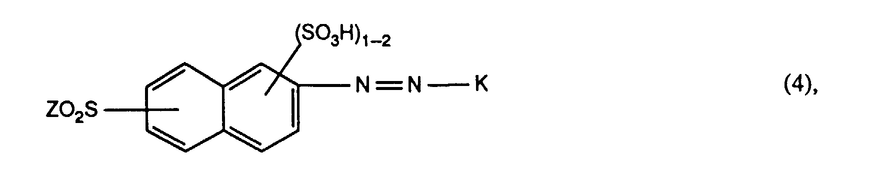 wherein Z and K are as defined in claim 1.

3. A reactive dye according to either claim 1 or 2, wherein R is hydrogen or C₁-C₄alkyl, preferably hydrogen.

4. A reactive dye according to any one of claims 1 to 3, wherein R₃ is hydrogen.

5. A reactive dye according to any one of claims 1 to 4, wherein Y is a group of formula -Cl, -OSO₃H, -SSO₃H, -OCO-CH₃, -OCO-C₆H₅ or -OPO₃H₂, preferably a group of formula -Cl, -OSO₃H or -OCO-CH₃.

6. A reactive dye according to any one of claims 1 to 5, wherein n is 1.

7. A reactive dye according to any one of claims 1 to 6, wherein K is a radical of formula 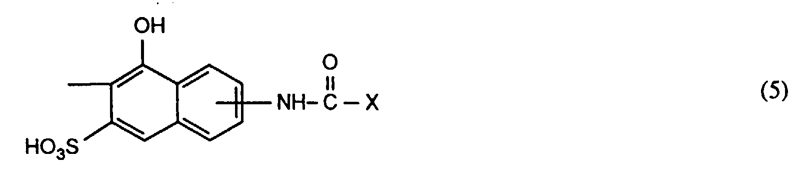 or 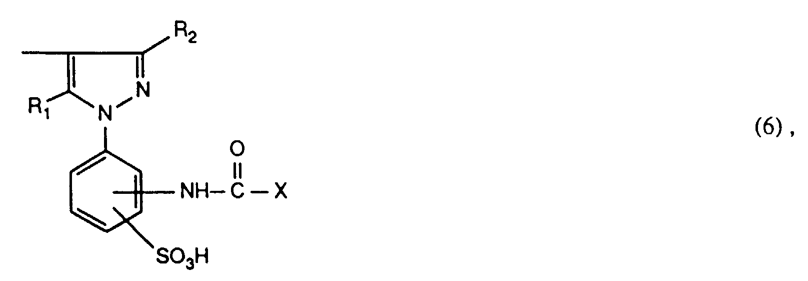 wherein X, R₁ and R₂ are as defined in claim 1.

8. A reactive dye according to claim 1, of formula 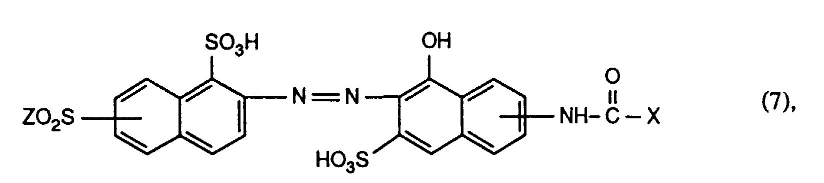 wherein
X is a radical of formula -CH₂-Cl, 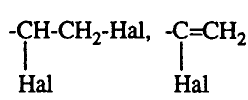 or -CH=CH₂, and Hal is halogen, and
Z is a group of formula -CH=CH₂ or -CH₂-CH₂-Y, and Y is a group of formula -Cl, -OSO₃H or -OCO-CH₃.

9. A reactive dye according to claim 1, of formula 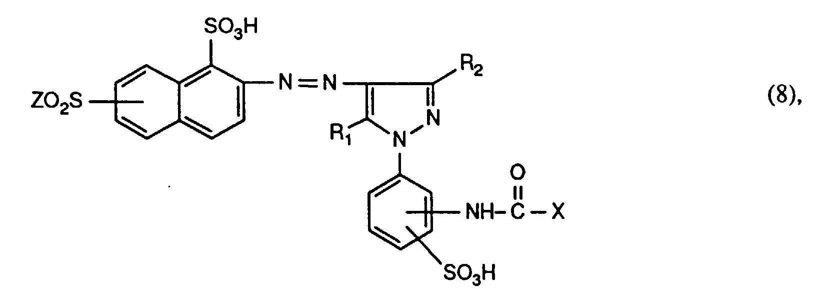 wherein
R₁ is amino or hydroxyl,
R₂ is methyl or carboxyl,
X is a radical of formula -CH₂-Cl, 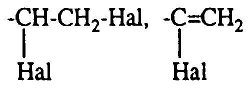 or -CH=CH₂, and Hal is halogen, and
Z is a group of formula -CH=CH₂ or -CH₂-CH₂-Y, and Y is a group of formula -Cl, -OSO₃H or -OCO-CH₃.

10. A reactive dye according to any one of claims 1 to 9, wherein X is a radical of formula 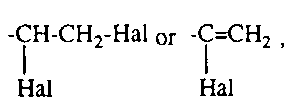 and Hal is halogen, and
Z is a group of formula -CH=CH₂ or -CH₂-CH₂-OSO₃H.

11. A reactive dye according to any one of claims 1 to 10, wherein Hal is bromo.

12. A process for the preparation of a reactive dye according to claim 1, which comprises diazotising an amine of formula 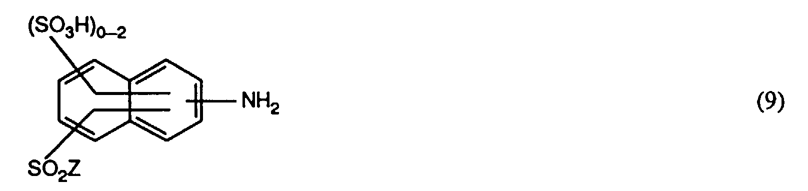 and coupling the diazonium salt to a compound of formula 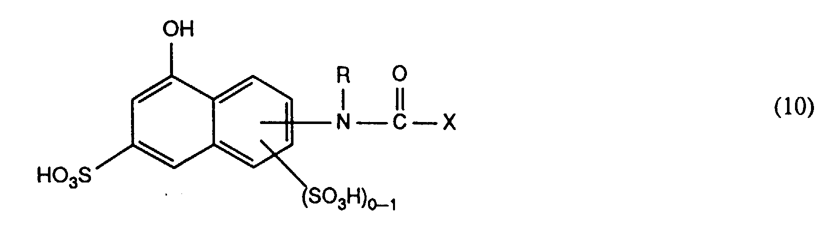 or 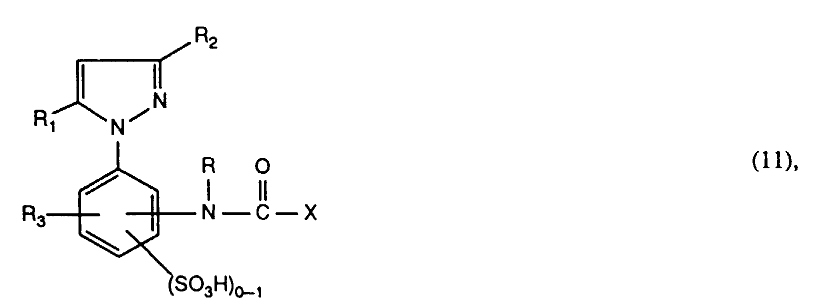 wherein X, Z, R, R₁, R₂ and R₃ are as defined in claim 1.

13. Use of a reactive dye according to any one of claims 1 to 1 or of a reactive dye obtained according to claim 12 for dyeing or printing hydroxyl group-containing or nitrogen-containing fibre material.

## Revendications

1. Colorants réactifs de formule 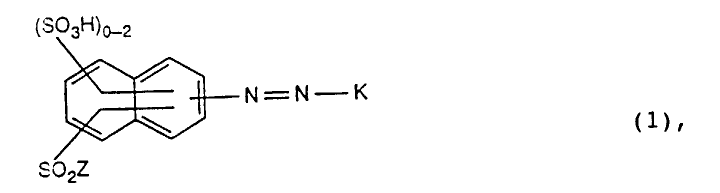 dans laquelle
Z représente un groupe de formule -CH=CH₂ ou -CH₂-CH₂-Y et Y représente un groupe partant, et
K représente un reste de formule 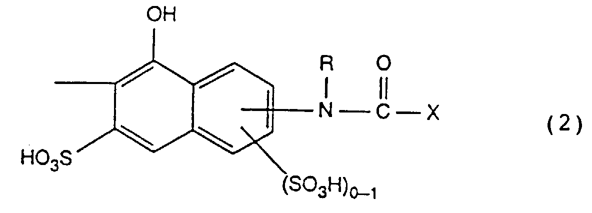 ou 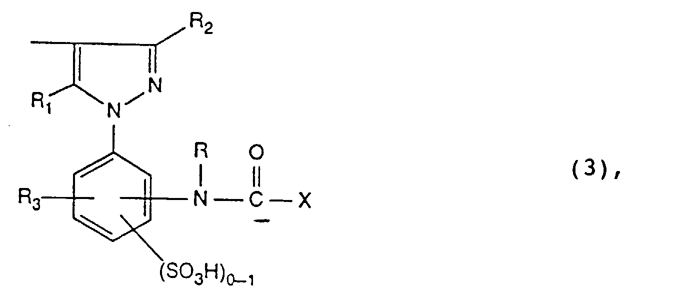
X représentant un reste de formule -(CH₂)ₙCl, 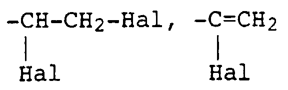 ou -CH=CH₂, Hal représente un un atome d'halogène et n vaut 1, 2, 3 ou 4,
R représente un atome d'hydrogène,
R₁ représente des groupes amino ou hydroxyle,
R₂ représente des groupes méthyle ou carboxyle et
R₃ représente un atome d'hydrogène, des groupes alkyle en C₁-C₄, alkoxy en C₁-C₄, (alcanoyl en C₂-C₄)amino, halogène ou carboxyle.

2. Colorants réactifs selon la revendication 1, de formule 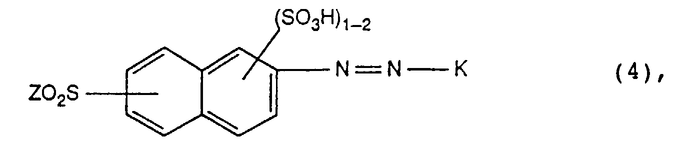 dans laquelle Z et K possèdent les significations données à la revendication 1.

3. Colorants réactifs selon l'une des revendications 1 ou 2, où R₃ représente un atome d'hydrogène.

4. Colorants réactifs selon l'une des revendications 1 à 3, où Y représente un groupe de formule -Cl, -OSO₃H, -SSO₃H, -OCO-CH₃, -OCO-C₆H₅ ou -OPO₃H₂, en particulier un groupe de formule -Cl, -OSO₃H ou -OCO-CH₃.

5. Colorants réactifs selon l'une des revendications 1 à 4, où n vaut 1.

6. Colorants réactifs selon l'une des revendications 1 à 5, où K est un reste de formule 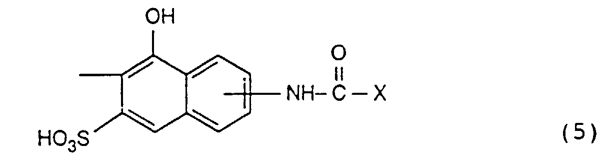 ou 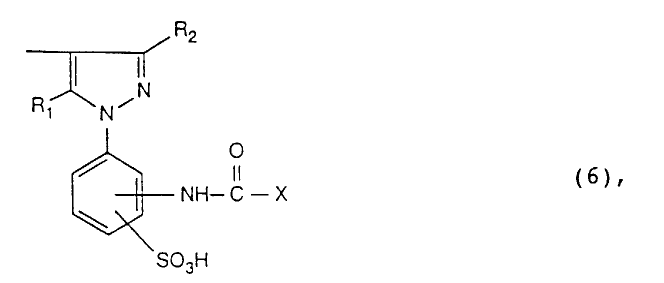 X, R₁ et R₂ possédant la signification donnée à la revendication 1.

7. Colorants réactifs selon la revendication 1, de formule 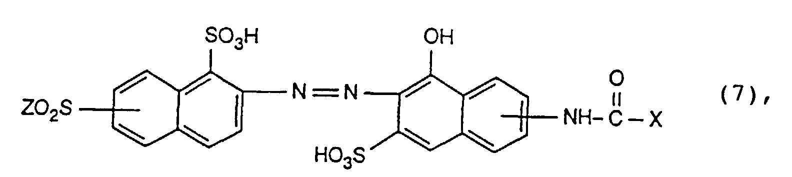 où
X représente un reste de formule -CH₂-Cl, 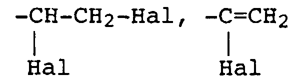 ou -CH=CH₂ et Hal représente un atome d'halogène, et
Z représente un groupe de formule -CH=CH₂ ou -CH₂-CH₂-Y et Y représente un groupe de formule -Cl, -OSO₃H ou -OCO-CH₃.

8. Colorants réactifs selon la revendication 1, de formule 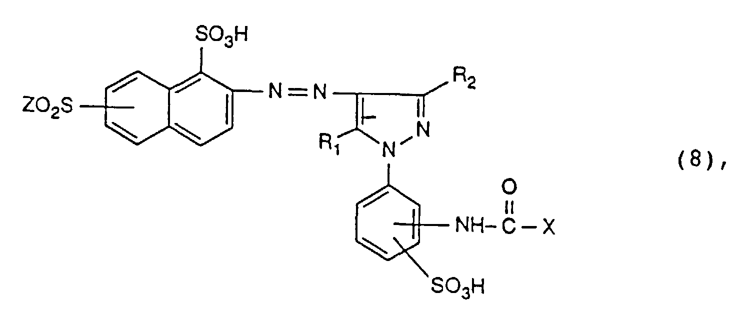 où
R₁ représente des groupes amino ou hydroxyle,
R₂ représente des groupes méthyle ou carboxyle,
X représente un reste de formule -CH₂-Cl, 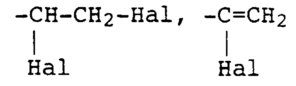 ou -CH=CH₂ et Hal représente un atome d'halogène, et
Z représente un groupe de formule -CH=CH₂ ou -CH₂-CH₂-Y et Y représente un groupe de formule -Cl, -OSO₃H ou -OCO-CH₃.

9. Colorants réactifs selon l'une des revendications 1 à 8, où
X représente un reste de formule 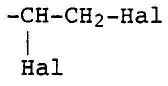 ou 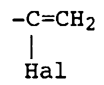 et Hal représente un atome d'halogène, et
Z représente un groupe de formule -CH=CH₂ ou -CH₂-CH₂-OSO₃H.

10. Colorants réactifs selon l'une des revendications 1 à 9, où Hal représente un atome de brome.

11. Procédé de préparation de colorants réactifs selon la revendication 1, caractérisé en ce qu'on diazote une amine de formule 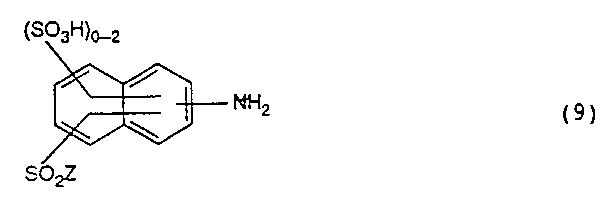 et on copule sur un composé de formule 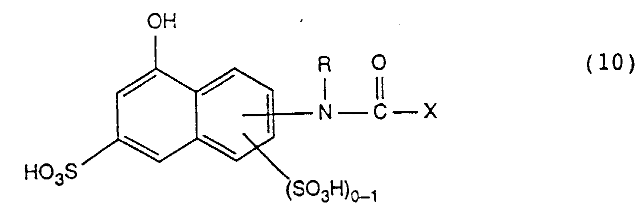 ou 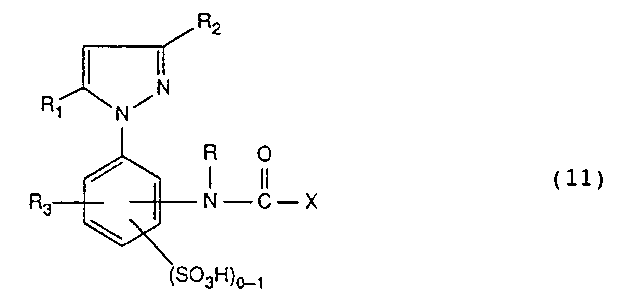 X, Z, R, R₁, R₂ et R₃ possédant les significations données à la revendication 1.

12. Utilisation des colorants réactifs selon l'une des revendications 1 à 10, respectivement des colorants réactifs obtenus selon la revendication 11, pour la teinture ou l'impression de matières de fibres contenant des groupes hydroxyle ou des atomes d'azote.

13. Utilisation selon la revendication 12, pour la teinture ou l'impression de matières de fibres cellulosiques ou de matières de fibres polyamide naturelles ou synthétiques.
